# EUROPEAN PATENT APPLICATION

(11) **EP 4 287 443 A1**
(43) Date of publication of application: **06.12.2023**
(21) Application number: 21932292.2
(22) Date of filing: 26.03.2021
(51) Int. Cl.: H02J 7/00

(54) **CHARGING CONTROL APPARATUS AND METHOD, AND ELECTRIC VEHICLE**

(71) Applicant: Huawei Technologies Co., Ltd., Shenzhen, Guangdong 518129 (CN)
(72) Inventor: LI, Haijun, Shenzhen, Guangdong 518129 (CN); FAN, Zhen, Shenzhen, Guangdong 518129 (CN)
(74) Representative: Maiwald GmbH
(86) International application number: PCT/CN2021/083418
(87) International publication number: WO 2022/198673

(57) **Abstract**

This application discloses a charging control apparatus and method, and an electric vehicle. The charging control apparatus includes: a signal processing module, configured to: receive a first control pilot signal sent by power sourcing equipment, and send a high-level signal of target duration to a wake-up module based on the first control pilot signal; and the wake-up module, configured to: wake up a battery management system after duration in which the high-level signal is received reaches the target duration. With the use of the charging control apparatus, even if power is on again after a power failure in a charging process, there is no need to remove a charging connector from and re-insert the charging connector into a charging socket or restart an electric vehicle/a charging pile. As long as the charging control apparatus receives any CP signal again, the charging control apparatus can wake up the battery management system based on the high-level signal of the target duration, to continue charging.

## Description

### TECHNICAL FIELD

This application relates to the field of electric vehicle charging, and in particular, to a charging control apparatus and method, and an electric vehicle.

### BACKGROUND

With the development of economy, electric vehicles are increasingly becoming electronic products, and requirements for intelligence and green environmental protection of vehicles are increasingly high. Currently, when a charging connector is inserted into an electric vehicle on the market without charging the electric vehicle, a battery management system (battery management system, BMS) of the electric vehicle enters a dormant state. However, after the BMS enters the dormant state, the BMS cannot be directly woken up by a control pilot (control pilot, CP) signal sent by power sourcing equipment (like a charging pile), and the BMS can be woken up only by re-inserting the charging connector or restarting the electric vehicle on site, so that a power battery of the electric vehicle can be further charged by using the BMS.

Because an on-site operation needs to be performed manually, remote control of the electric vehicle cannot be implemented in the foregoing manner. How to ensure remote control of charging an electric vehicle is an urgent problem to be resolved in this field.

### SUMMARY

This application provides a charging control apparatus and method, and an electric vehicle, to improve flexibility of waking up a BMS of an electric vehicle, and implement remote control of charging an electric vehicle.

According to a first aspect, an embodiment of this application provides a charging control apparatus. The charging control apparatus mainly includes a signal processing module and a wake-up module. The signal processing module is connected to power sourcing equipment, and the wake-up module is connected to a battery management system. The signal processing module is configured to: receive a first control pilot signal sent by the power sourcing equipment, and send a high-level signal of target duration to the wake-up module based on the first control pilot signal. The wake-up module is configured to wake up the battery management system after duration in which the high-level signal is received reaches the target duration. It may be understood that the power sourcing equipment is configured to provide a charging function, and supplements electric energy from a fixed facility (for example, a building or a grid) to an electric vehicle. The power sourcing equipment needs to meet a charging mode and a connection manner that are specified in a charging standard.

Based on the foregoing connection relationship, after the power sourcing equipment successfully wakes up the battery management system by using the charging control apparatus, the power sourcing equipment may adjust an alternating-current or a direct-current power supply to a calibrated voltage or current, to input the calibrated voltage or current to a power battery, to provide electric energy for the power battery of the electric vehicle. Further, the power sourcing equipment may further provide, based on the control pilot signal, at least one of the following control pilot functions in a charging process of the electric vehicle: a continuous monitoring function that protects continuity of a grounding conductor, a function of confirming a correct connection between the electric vehicle and the power sourcing equipment, a power supply control function, a power-off control function, a function of displaying maximum current information, and the like. According to a technical solution provided in the example of this application, after receiving any type of control pilot signal, the charging control apparatus can generate the high-level signal of the target duration based on the control pilot signal, and wake up the battery management system by using the high-level signal of the target duration as a wake-up signal, to implement a one-time wake-up function. In addition, regardless of a type of control pilot signal received by the charging control apparatus, a finally generated wake-up signal is a signal with a fixed pulse width and a fixed voltage amplitude. With the use of the apparatus, even if power is on again after a power failure in a charging process, there is no need to remove a charging connector from and re-insert the charging connector into a charging socket of the electric vehicle or restart the electric vehicle/a charging pile. As long as the charging control apparatus receives any control pilot signal again, the charging control apparatus can wake up the battery management system based on the high-level signal of the target duration, to continue charging.

The charging control apparatus provided in this application may further include the signal processing module. The signal processing module includes a signal generation module and a signal control module. The signal generation module is configured to: receive the first control pilot signal, generate the high-level signal based on the first control pilot signal, and send the high-level signal to the signal control module and the wake-up module. The signal control module is configured to: after the duration in which the high-level signal is received reaches the target duration, enable the signal generation module to stop sending the high-level signal to the wake-up module. The structure is used. The first control pilot signal can be shaped into the high-level signal, and the high-level signal can be separately sent to the signal control module and the wake-up module. In addition, after duration in which the signal control module receives the high-level signal reaches the target duration, the signal generation module is enabled to stop sending the high-level signal to the wake-up module, so that the wake-up module can receive the high-level signal of the target duration, and generate the high-level signal of the target duration to wake up the battery management system.

The signal generation module in the charging control apparatus provided in this application includes: a direct-current blocking module, configured to: receive the first control pilot signal, remove a direct-current component from the first control pilot signal to generate a first signal, and send the first signal to a clamping module, where the first signal is an alternating-current signal; the clamping module, configured to: keep a top or a bottom of a waveform of the first signal at a target level to obtain a second signal, and send the second signal to a filtering module; and the filtering module, configured to: filter the second signal to obtain the high-level signal, and separately send the high-level signal to the signal control module and the wake-up module. The structure is used. The charging control apparatus may convert the received first control pilot signal into a unipolar signal for outputting, to generate a stable high-level signal. For example, the direct-current blocking module removes the direct-current component in the first control pilot signal by using a direct-current blocking principle of a capacitor. The clamping module is configured to convert the first signal into a unipolar signal, and the filtering module processes the second signal into a stable fixed-level signal by using an RC filtering principle.

The signal control module in the charging control apparatus provided in this application includes a capacitor charging module and a shutdown module. The capacitor charging module includes a charging capacitor. The shutdown module includes a switch transistor. A first end of the charging capacitor is connected to an output end of the signal generation module and a first end of the switch transistor. A second end of the charging capacitor is grounded. A second end of the switch transistor is connected between the signal generation module and the wake-up module. A third end of the switch transistor is grounded. Duration in which the charging capacitor is charged to a target voltage is the target duration. The capacitor charging module is configured to: after receiving the high-level signal, charge the charging capacitor in the shutdown module based on the high-level signal. The shutdown module is configured to: when a voltage of the charging capacitor reaches the target voltage, connect the second end of the switch transistor and the third end of the switch transistor, so that the signal generation module stops sending the high-level signal to the wake-up module. In a possible implementation, the switch transistor in the capacitor charging module is an N-type metal oxide semiconductor NMOS.

The structure is used. The high-level signal is input to the wake-up module while being input to the capacitor charging module, so that the switch transistor may be instantly opened to generate a high edge and charge the charging capacitor. When the charging capacitor is charged, a voltage of a gate electrode of the switch transistor slowly increases. When the voltage of the gate electrode is greater than the target voltage, a channel of the switch transistor is opened, and a level of a next stage is pulled down. Then the switch transistor is turned off to enable the high-level signal that is input to the wake-up module to be grounded. Finally, the high-level signal of the target duration may be generated to wake up the battery management system.

To implement a function of scheduled waking up charging, in a possible implementation, the charging control apparatus provided in this application further includes a time determining module. The time determining module is configured to: obtain current time, and when determining that the current time is within a specified time range, control the signal processing module to send the high-level signal of the target duration to the wake-up module based on the first control pilot signal. The structure is used. When determining that the current time is in non-peak electricity demand hours or a power rate is low, the time determining module may control the signal processing module to send the high-level signal of the target duration to the wake-up module based on the first control pilot signal, to wake up the battery management system to perform charging. This reduces overheads caused by charging.

Further, time information may be set in the time determining module. The time information may indicate a time period for performing scheduled charging. The time information may be time information that a user may configure for the charging control apparatus based on a use habit, a use requirement, and a use scenario of the user. Specifically, the time information may be used to calculate a charging time period based on at least one of the following data, to configure the time information: electricity consumption statistics data, driving distance data, charging data, and the like. Therefore, charging time can be determined based on different time information, to further reduce overheads caused by charging.

To implement a function of remotely setting charging time, in a possible implementation, the charging control apparatus provided in this application further includes an operation module. The operation module is configured to generate an operation instruction based on an operation of a user, and the operation instruction may indicate time information. For example, the operation module may be a touchscreen, and the user may perform a touch operation on the touchscreen, to complete setting the time information. In addition, in another possible implementation, the charging control apparatus provided in this application further includes a communication module. The communication module receives time information, and the time information may be sent by a terminal. Therefore, the user can remotely set a corresponding charging time period. This improves user experience.

To implement a bidirectional charging function, in a possible implementation, the charging control apparatus provided in this application further includes a second control pilot signal generation module, configured to: obtain the first level signal from the battery management system, generate a second control pilot signal based on the first level signal, and send the second control pilot signal to a powered device. We understand that the powered device may be, but is not limited to, an electric vehicle, or may be other utilization equipment designed in compliance with *the Electric Vehicle Conductive Charging System Standard.* A person skilled in the art should know that, and this is not limited herein. The structure is used. The first level signal obtained from the battery management system may be adjusted, to obtain a level signal that meets a voltage standard of a control pilot signal, and shaping processing is performed on the level signal that meets the voltage standard of the control pilot signal, to finally output the second control pilot signal, to implement a control pilot function based on the second control pilot signal.

In a possible implementation, the charging control apparatus provided in this application further includes a switch module, configured to: when the battery management system needs to be woken up, connect the power sourcing equipment to the signal processing module; and when the powered device needs to be charged, connect the powered device to the second control pilot signal generation module. By using the switch module, the charging control apparatus in this embodiment of this application can implement a bidirectional charging technology, not only receive electric energy provided by the power sourcing equipment, but also provide electric energy for the powered device in another time period.

In a possible implementation, the second control pilot signal generation module in the charging control apparatus provided in this application includes a boost module, configured to: obtain the first level signal from the battery management system, perform boost processing on the first level signal to obtain a second level signal, and separately send the second level signal to a charge pump module and a comparison module; the charge pump module, configured to: generate a third level signal based on the second level signal, and send the third level signal to the comparison module, where a level of the third level signal and a level of the second level signal are opposite numbers; and the comparison module, configured to: receive the second level signal and the third level signal, generate the second control pilot signal based on the second level signal and the third level signal according to a target waveform rule, and send the second control pilot signal to the powered device. This structure is used. The boost module may boost and stabilize the first level signal to the second level signal. When the second control pilot signal is a PWM signal, the charge pump module converts an input positive level into a reverse negative level, and the comparison module outputs the PWM signal based on positive and negative level signals that are simultaneously input. In another possible implementation, to enable a positive-going transition and falling of a waveform of the output second control pilot signal to meet a requirement of the national standard, the comparison module may further include a triode active amplification circuit. Active amplification is performed by the triode active amplification circuit to reduce slew time and accelerate a rising/falling inversion rate, so that the waveform meets the requirement of the national standard.

To ensure normal operation of the electric vehicle, the charging control apparatus provided in this application further includes a battery level detection module, configured to: detect a current battery level, and when the battery level is less than a preset value, enable the battery management system to be dormant and stop charging the powered device. By using the structure, it can be ensured that various types of utilization equipment inside the electric vehicle normally work on a premise that power supply to another powered device is supported.

According to a second aspect, an embodiment of this application further provides a charging control method. The method is applied to the charging control apparatus provided in any one of embodiments in the first aspect. For a technical effect of a corresponding solution in the second aspect, refer to a technical effect that can be obtained by using a corresponding solution in the first aspect. Repeated parts are not described in detail.

For example, the charging control method provided in this embodiment of this application mainly includes: receiving a first control pilot signal, and generating a high-level signal of target duration based on the first control pilot signal; and sending the high-level signal of the target duration to a battery management system, to wake up the battery management system. The method is used. After receiving any type of control pilot signal, the charging control apparatus can generate the high-level signal of the target duration based on the control pilot signal, and wake up the battery management system by using the high-level signal of the target duration as a wake-up signal, to implement a one-time wake-up function.

In some possible implementations, the charging control method provided in this embodiment of this application may further includes: receiving the first control pilot signal, and generating the high-level signal based on the first control pilot signal; and stopping sending the high-level signal after duration in which the high-level signal is received reaches the target duration.

In some possible implementations, the charging control method provided in this embodiment of this application may further include: receiving the first control pilot signal, and removing a direct-current component from the first control pilot signal to generate a first signal, where the first signal is an alternating-current signal; keeping a top or a bottom of a waveform of the first signal at a target level, to obtain a second signal; and filtering the second signal to obtain the high-level signal.

In some possible implementations, the charging control method provided in this embodiment of this application may further include: The high-level signal may charge a charging capacitor, where duration in which the charging capacitor is charged to a target voltage is the target duration; and when a voltage of the charging capacitor reaches the target voltage, connecting a second end of a switch transistor and a third end of the switch transistor, and stopping sending the high-level signal.

In some possible implementations, the charging control method provided in this embodiment of this application may further include: obtaining a first level signal from the battery management system, generating a second control pilot signal based on the first level signal, and sending the second control pilot signal to a powered device.

In some possible implementations, the charging control method provided in this embodiment of this application may further include: obtaining the first level signal from the battery management system, performing boost processing on the first level signal to obtain a second level signal; generating a third level signal based on the second level signal, where a level of the third level signal and a level of the second level signal are opposite numbers; and receiving the second level signal and the third level signal, generating the second control pilot signal based on the second level signal and the third level signal according to a target waveform rule, and sending the second control pilot signal to the powered device.

According to a third aspect, an embodiment of this application further provides an electric vehicle. The electric vehicle includes the charging control apparatus provided in any one of embodiments in the first aspect. For a technical effect of a corresponding solution in the third aspect, refer to a technical effect that can be obtained by using a corresponding solution in the first aspect. Repeated parts are not described in detail.

According to a fourth aspect, an embodiment of this application further provides a charging control system. The system includes power sourcing equipment, an electric vehicle, and the charging control apparatus provided in any one of embodiments in the first aspect. The charging control apparatus is separately connected to the power sourcing equipment and the electric vehicle. For a technical effect of a corresponding solution in the fourth aspect, refer to a technical effect that may be obtained by using a corresponding solution in the first aspect. Repeated parts are not described in detail.

These aspects or other aspects of this application are more concise and understandable in descriptions of the following embodiments.

### BRIEF DESCRIPTION OF DRAWINGS

FIG. 1 is a schematic diagram of a structure of an electric vehicle;
FIG. 2 is a schematic diagram of a structure of a charging control apparatus;
FIG. 3 is a schematic diagram of a structure of a signal processing module;
FIG. 4 is a schematic diagram of a structure of a signal generation module;
FIG. 5 is a schematic diagram of a specific structure of a signal control module;
FIG. 6 is a schematic diagram of another structure of a charging control apparatus;
FIG. 7 is a schematic diagram of a structure of a charging control apparatus including a switch module;
FIG. 8 is a schematic diagram of a structure of a second control pilot signal generation module;
FIG. 9A is a schematic diagram of a specific structure of a charging control apparatus;
FIG. 9B is a schematic diagram of a signal processing transformation;
FIG. 9C is a schematic diagram of another signal processing transformation; and
FIG. 10 is a schematic diagram of a charging control method.

### DESCRIPTION OF EMBODIMENTS

A specific operation method in method embodiments in this application may also be applied to an apparatus embodiment or a system embodiment. It should be noted that in description of this application, "at least one" means one or more, and "a plurality of" means two or more. In view of this, in embodiments of this application, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

The following first describes some terms in embodiments of this application to help a person skilled in the art have a better understanding.
(1) A connection confirm (connection confirm, CC) signal is a function signal that indicates, electronically or mechanically, a state in which a vehicle plug is connected to an electric vehicle and/or a power supply plug is connected to a charging device.
(2) A control pilot (control pilot, CP) signal is a communication signal that is between an electric vehicle and electric vehicle supply equipment and that is used to implement interaction and monitoring.
(3) A battery management system (battery management system, BMS) is a control system that protects use safety of a power battery in an electric vehicle, monitors a use status of the power battery, takes necessary measures to mitigate inconsistency of the power battery, and provides safety guarantee for use of the power battery.

To make objectives, technical solutions, and advantages of this application clearer, the following further describes this application in detail with reference to the accompanying drawings.

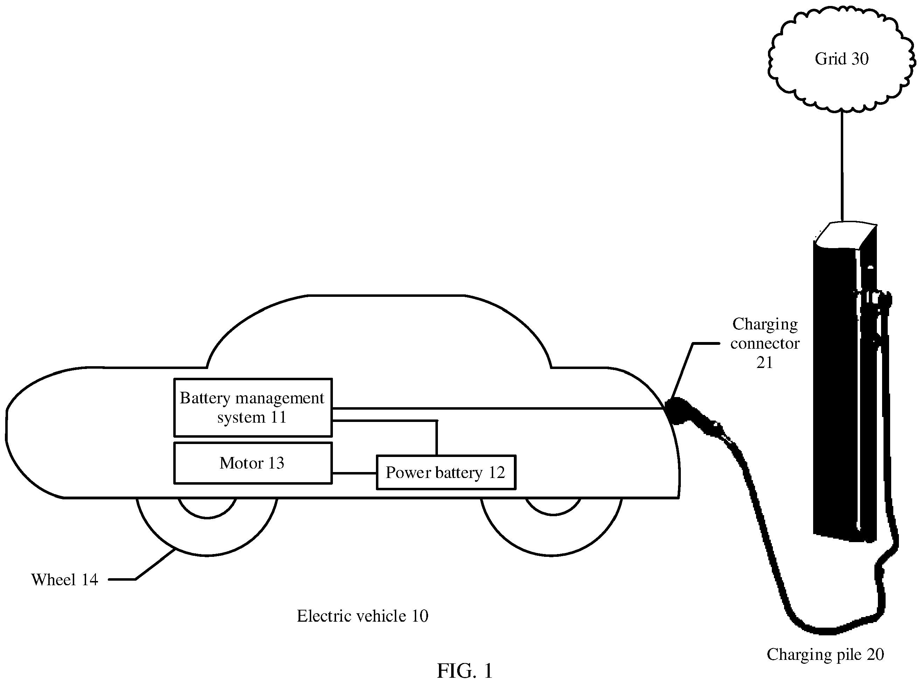

The electric vehicle, which may also be referred to as a new energy vehicle, is a vehicle driven by electric energy. As shown in FIG. 1, an electric vehicle 10 mainly includes a battery management system 11, a power battery 12, a motor 13, and a wheel 14.

The power battery 12 is a battery with a large capacity and high power. The power battery 12 may provide electric energy for some or all components of the electric vehicle 10. In some examples, the power battery 12 may include one or more rechargeable lithium-ion or leadacid batteries. In addition, the power battery 12 may further use another power supply material and configuration, which is not limited herein. When the electric vehicle 10 travels, the power battery 12 may supply power to the motor 13 by using a motor control unit (motor control unit, MCU) in the battery management system 11. The motor 13 converts electric energy provided by the power battery 12 into mechanical energy, to drive the wheel 14 to rotate. Therefore, the electric vehicle 10 travels.

When the electric vehicle 10 is being charged, the power battery 12 of the electric vehicle 10 may be generally charged by a charging pile 20. Still as shown in FIG. 1, the charging pile 20 mainly includes a power supply circuit (not shown in FIG. 1) and a charging connector 21. One end of the power supply circuit is connected to a grid 30, and the other end is connected to the charging connector 21 through a cable. An operator may insert the charging connector 21 into a charging socket of the electric vehicle 10, so that the charging connector 21 is connected to the battery management system 11 in the electric vehicle 10, and the power supply circuit of the charging pile 20 may further charge the power battery 12 by using the charging connector 21.

According to a stipulation in the national standard of *the Electric Vehicle Conductive Charging System Standard*, in addition to an alternating-current connection, there are two signal ports between the charging pile 20 and the charging socket: a CP signal port for transmitting a CP signal and a CC signal port for transmitting a CC signal. The CC signal port of the charging socket and the battery management system 11 are purely resistive, and the CP signal is a PWM wave.

After the charging connector 21 is inserted into the charging socket, the battery management system 11 determines a power supply capability of the charging pile 20 and a type of a charging cable connecting the charging pile 20 and the battery management system 11 by comparing resistance values between a CC signal identification port and the battery management system 11. In addition, the battery management system 11 further determines output power of the charging pile 20 based on a duty cycle of the CP signal. After the battery management system 11 completes a related charging configuration based on the power supply capability and the output power of the charging pile 20, the battery management system 11 controls an on board charger (on board charger, OBC) inside the electric vehicle 10 to receive electric energy provided by the charging pile 20, to charge the power battery 12.

When the charging pile 20 does not provide electric energy for the electric vehicle 10, the battery management system 11 in the electric vehicle 10 enters a dormant state, to save electric energy and prevent the power battery 12 from losing electricity. Therefore, the dormant battery management system 11 cannot maintain a specific voltage to monitor the CC signal, and therefore the battery management system 11 cannot be woken up again.

In this case, if the power battery 12 needs to continue to be charged, the battery management system 11 can be woken up only when a person goes to a site to remove and re-insert the charging connector 21 into the charging socket of the electric vehicle 10 or restart the electric vehicle 10/charging pile 20.

Currently, waking up the battery management system 11 requires manual participation. This leads to poor user experience. Therefore, a new method for waking up the battery management system 111 needs to be urgently proposed, to implement remote control of charging the electric vehicle 10 and improve user experience.

In view of this, this application provides a charging control apparatus and method, and an electric vehicle. In this solution, after receiving any type of CP signal, the charging control apparatus can generate a high-level signal of target duration based on the CP signal, and wake up a battery management system by using the high-level signal of the target duration as a wake-up signal, to implement a one-time wake-up function. In addition, regardless of a type of CP signal received by the charging control apparatus, a finally generated wake-up signal is a signal with a fixed pulse width and a fixed voltage amplitude. With the use of the apparatus, even if power is on again after a power failure in a charging process, there is no need to remove a charging connector from and re-insert the charging connector into a charging socket of the electric vehicle or restart the electric vehicle/a charging pile. As long as the charging control apparatus receives any CP signal again, the charging control apparatus can wake up the battery management system based on the high-level signal of the target duration, to continue charging.

The following describes in detail embodiments of this application with reference to the accompanying drawings.

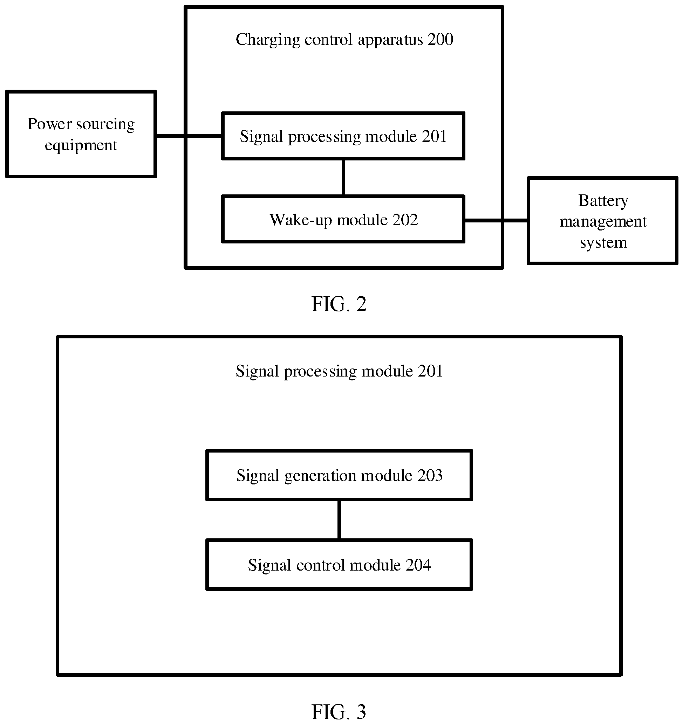

This application provides a charging control apparatus 200. As shown in FIG. 2, the charging control apparatus 200 includes a signal processing module 201 and a wake-up module 202. The signal processing module 201 is configured to: receive a first control pilot signal sent by power sourcing equipment, and send a high-level signal of target duration to the wake-up module 202 based on the first control pilot signal.

The wake-up module 202 is configured to wake up a battery management system after duration in which the high-level signal is received reaches the target duration.

The power sourcing equipment in embodiments of this application is equipment that provides a charging function for an electric vehicle, and supplements electric energy from a fixed facility (for example, a building or a grid) to the electric vehicle. The power sourcing equipment needs to meet a charging mode and a connection manner that are specified in a charging standard. For example, the power sourcing equipment may be connected to a power-frequency grid, and may receive electric energy provided by the power-frequency grid, to provide a stable output voltage for the electric vehicle. In some examples, the power sourcing equipment may be a standalone device or a combined device.

After the power sourcing equipment successfully wakes up the battery management system through the charging control apparatus 200, the power sourcing equipment may adjust an alternating-current or a direct-current power supply to a calibrated voltage or current, to input the calibrated voltage or current to a power battery, to provide electric energy for the power battery of the electric vehicle. The power battery may further supply power to vehicle-mounted electrical equipment (like a car audio or a vehicle-mounted navigator) of the electric vehicle. Further, the power sourcing equipment may further provide, based on a control pilot signal (CP signal), at least one of the following control pilot functions in a charging process of the electric vehicle: a continuous monitoring function that protects continuity of a grounding conductor, a function of confirming a correct connection between the electric vehicle and the power sourcing equipment, a power supply control function, a power-off control function, a function of displaying maximum current information, and the like. In addition, when the power sourcing equipment simultaneously charges a plurality of electric vehicles, it can be ensured that the control pilot functions can be normally implemented on each connected electric vehicle.

The power sourcing equipment and the charging control apparatus 200 may be connected through a charging cable. The charging cable may be a part of the charging control apparatus 200, or may be a part of the power sourcing equipment. In addition, the charging cable may alternatively be in a detachable structure, and is independent of the charging control apparatus 200 and the power sourcing equipment. A person skilled in the art should know that. This is not limited herein.

The continuous monitoring function that protects continuity of a grounding conductor is used to stop power supply when the electric vehicle loses protection of electrical continuity of the grounding conductor. The function of confirming a correct connection between the electric vehicle and the power sourcing equipment is used to determine, based on a CC signal, whether the charging cable is correctly inserted into the power sourcing equipment and the charging control apparatus 200. The power supply control function of the electric vehicle is used to establish, based on the control pilot signal, a connection between the power sourcing equipment and waking up of the battery management system. After the battery management system completes a related charging configuration, the battery management system controls an on board charger to receive electric energy provided by a charging pile, to charge the power battery.

The signal processing module 201 is configured to adjust the first control pilot signal to the high-level signal of the target duration. In the foregoing embodiment, the first control pilot signal may be the CP signal sent by the power sourcing equipment. The CP signal may be at least one of a discrete input signal and a PWM signal. In some examples, the CP signal may include at least one of the following:
a step signal whose amplitude is 0 to N V, a PWM signal whose duty cycle is D and whose amplitude is 0 to N V, and a PWM signal whose duty cycle is D and whose amplitude is - N to N V, where a value range of D is 0% to 100%, and N is a positive integer; the power sourcing equipment performs encoding by using different PWM duty cycles and different signal amplitudes of CP signals, to indicate, to the battery management system, parameters such as a current and a voltage that can be used by the power sourcing equipment for charging; in some examples, a value of N required by the national standard may be 6 V, 9 V, or 12 V; the battery management system may obtain, based on a duty cycle and a signal amplitude of the CP signal, parameters such as a current and a voltage that are provided by the power sourcing equipment and that are used for charging; for example, when the duty cycle D is between 10% and 85%, a maximum charging current that can be provided by the power sourcing equipment is I=Dx100x0.6; and when the duty cycle D is equal to 0%, it indicates that the power sourcing equipment is unavailable.

In this embodiment of this application, the wake-up module 202 may be a logic circuit that has a logical operation function and a signal identification function. For example, the wake-up module 202 may be a processor, a central processing unit (central processing unit, CPU), a system on chip (system on chip, SoC), an electronic control unit (electronic control unit, ECU), or the like. Details are not listed one by one in this embodiment of this application. The wake-up module 202 is configured to: after receiving and identifying the high-level signal of the target duration, wake up the battery management system.

It should be noted that, an amplitude of the high-level signal sent by the signal processing module 201 to the wake-up module 202 and the target duration may be freely set by a person skilled in the art based on a specific structure supported by the battery management system. This is not limited in this embodiment of this application. For example, when a circuit structure or a module that can identify a signal whose amplitude is greater than 12 V for more than 1s exists in the battery management system, an amplitude of the high-level signal of the target duration may be set to be greater than 12 V, and the target duration may be set to be greater than 1s.

In a possible implementation, as shown in FIG. 3, the signal processing module 201 includes:
a signal generation module 203, configured to: receive the first control pilot signal, generate the high-level signal based on the first control pilot signal, and separately send the high-level signal to a signal control module and the wake-up module; and
the signal control module 204, configured to: after the duration in which the high-level signal is received reaches the target duration, enable the signal generation module to stop sending the high-level signal to the wake-up module.

In an example, the signal generation module 203 may be a circuit configured to shape a signal, and is configured to: shape the first control pilot signal into the high-level signal, and separately send the high-level signal to the signal control module 204 and the wake-up module.

In an example, the signal control module 204 is a circuit that can perform timing. After the duration in which the high-level signal is received reaches the target duration, the signal generation module 203 is enabled to stop sending the high-level signal to the wake-up module, so that the wake-up module can receive the high-level signal of the target duration.

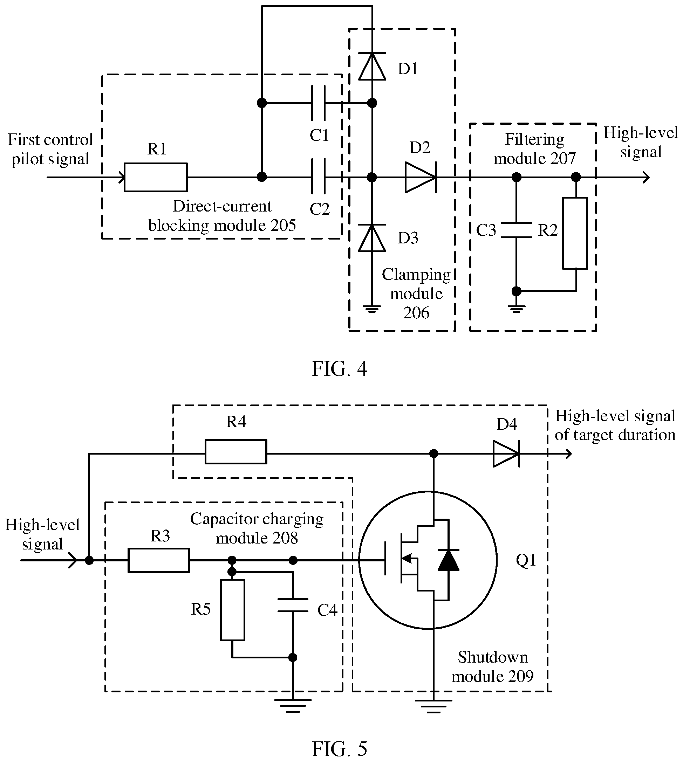

Further, in a possible implementation, as shown in FIG. 4, the signal generation module 203 includes a direct-current blocking module 205, a clamping module 206, and a filtering module 207. The direct-current blocking module 205 is configured to: receive the first control pilot signal, remove a direct-current component from the first control pilot signal to generate a first signal, and send the first signal to the clamping module 206, where the first signal is an alternating-current signal.

The clamping module 206 is configured to: keep a top or a bottom of a waveform of the first signal at a target level, to obtain a second signal, and send the second signal to the filtering module 207.

The filtering module 207 is configured to: filter the second signal to obtain the high-level signal, and separately send the high-level signal to the signal control module 204 and the wake-up module 202.

Specifically, the direct-current blocking module 205 and the clamping module 206 are configured to convert the first control pilot signal into a unipolar signal. The direct-current blocking module 205 removes the direct-current component from the first control pilot signal by using a direct-current blocking principle of a capacitor. The clamping module 206 is configured to convert the first signal into the unipolar signal. The filtering module 207 processes the second signal into a stable fixed-level signal by using an RC filtering principle.

Still refer to FIG. 4. For example, the direct-current blocking module 205 may specifically include a first resistor R1. A first end of the first resistor R1 is configured to input the first control pilot signal, and a second end of the first resistor R1 is coupled to a first end of a first capacitor C1 and a first end of a second capacitor C2. A second end of the first capacitor C1 is coupled to an input end of the clamping module 206, and a second end of the second capacitor C2 is coupled to the input end of the clamping module 206. After the first control pilot signal passes through the first resistor R1, the first capacitor C1 and the second capacitor C2 are connected in parallel to form a direct-current blocking part, to filter out a direct-current component.

The clamping module 206 may specifically include: a first diode D1, where the first diode D1 and the direct-current blocking module 205 are connected in parallel, a negative electrode of the first diode D1 is coupled to an input end of the direct-current blocking module 205, and a positive electrode of the first diode D1 is coupled to an output end of the direct-current blocking module 205; a second diode D2, where a negative electrode of the second diode D2 is coupled to the output end of the direct-current blocking module 205, and a positive electrode of the second diode D2 is grounded; and a third diode D3, where a positive electrode of the third diode D3 is coupled to the output end of the direct-current blocking module 205, and a negative electrode of the third diode D3 is coupled to an input end of the filtering module 207. The first diode D1 has a discharge function, and is configured to adjust the first signal input by the direct-current blocking module 205 to a preset amplitude level. The second diode D2 and the third diode D3 have a clamping function, and are configured to keep the top or the bottom of the waveform of the first signal at the target level.

The filtering module 207 may include a third capacitor C3. A first end of the third capacitor C3 is coupled to an output end of the clamping module 206 to input the second signal, the first end of the third capacitor C3 is further coupled to a first end of a second resistor R2, and a second end of the third capacitor C3 is grounded. The first end of the second resistor R2 is further coupled to an input end of the signal control module 204, and a second end of the second resistor R2 is grounded. The third capacitor C3 and the second resistor R2 jointly form an RC filter circuit. When the first control pilot signal is a PWM signal, the RC filter circuit formed by the third capacitor C3 and the second resistor R2 may filter the PWM signal into a stable level for outputting.

In a possible implementation, as shown in FIG. 5, the signal control module 204 includes a capacitor charging module 208 and a shutdown module 209. The capacitor charging module 208 includes a charging capacitor, and the shutdown module 209 includes a switch transistor. A first end of the charging capacitor is connected to an output end of the signal generation module 203 and a first end of the switch transistor, and a second end of the charging capacitor is grounded. A second end of the switch transistor is connected between the signal generation module 203 and the wake-up module 202, and a third end of the switch transistor is grounded. The capacitor charging module 208 is configured to: after receiving the high-level signal, charge the charging capacitor in the shutdown module 209 based on the high-level signal. Based on the high-level signal, duration in which the charging capacitor is charged to a target voltage is the target duration. The shutdown module 209 is configured to: when a voltage of the charging capacitor reaches the target voltage, enable the second end of the switch transistor to be connected to the third end of the switch transistor, so that the signal generation module 203 stops sending the high-level signal to the wake-up module 202.

The high-level signal is input to the wake-up module 202 while being input to the capacitor charging module 208. The high-level signal may be used to instantly open the switch transistor to generate a high edge, and charge the charging capacitor. When the charging capacitor is charged, a voltage of a gate electrode (the first end) of the switch transistor increases slowly. When the voltage of the gate electrode is greater than the target voltage, a channel of the switch transistor is opened, and a level of a next stage is pulled down. In this way, the second end of the switch transistor and the third end of the switch transistor are connected, so that the high-level signal that is input to the wake-up module 202 is grounded, that is, the signal generation module 203 is grounded, and finally the high-level signal of the target duration may be generated.

Still refer to FIG. 5. For example, the signal control module 204 may specifically include: a third resistor R3, where a first end of the third resistor R3 is coupled to the output end of the signal generation module 203, and a second end of the third resistor R3 is coupled to a first end of a fifth resistor R5; a fourth resistor R4, where a first end of the fourth resistor R4 is coupled to the output end of the signal generation module 203, and a second end of the fourth resistor R4 is coupled to a positive electrode of a fourth diode D4; the fifth resistor R5, where a first end of the fifth resistor R5 is coupled to a first end of a fourth capacitor C4, the first end of the fifth resistor R5 and the first end of the fourth capacitor C4 are connected to a first end of a first switch transistor Q1, the first end of is a gate, and a second end of the fifth resistor R5 is grounded; the fourth capacitor C4, where a second end of the fourth capacitor C4 is grounded; the fourth diode D4, where a second end of the fourth diode is coupled to the wake-up module 202; and the first switch transistor Q1, where a second end of the first switch transistor Q1 is coupled between the second end of the fourth resistor R4 and the fourth diode D4, and a third end of the first switch transistor Q1 is grounded. The high-level signal instantly arrives at the wake-up module 202, and the fifth resistor R5 that the high-level signal passes through charges the fourth capacitor C4. After the fourth capacitor C4 reaches the target voltage, the second end and the third end of the first switch transistor Q1 are connected, so that the high-level signal of the target duration is finally sent to the wake-up module 202.

To implement a function of scheduled waking up charging, in some possible implementations, the charging control apparatus 200 further includes a time determining module. The time determining module is configured to: obtain current time, and when determining that the current time is within a specified time range, control the signal processing module 201 to send the high-level signal of the target duration to the wake-up module 202 based on the first control pilot signal. The specified time range corresponds to at least one of a specified power rate or a specified charging time period. The time determining module determines the current time, and the battery management system is woken up at the specific power rate or in the specific time period to complete charging. In a current power-frequency grid charging standard, electricity charges are high during peak electricity demand hours. In view of this, when determining that the current time is in non-peak electricity demand hours or a power rate is low, the time determining module may control the signal processing module 201 to send the high-level signal of the target duration to the wake-up module 202 based on the first control pilot signal, to wake up the battery management system to perform charging. This reduces charging overheads.

Further, time information may be set in the time determining module. The time information may indicate a time period for performing scheduled charging. The time information may be time information that a user may configure for the charging control apparatus 200 based on a use habit, a use requirement, and a use scenario of the user. Specifically, the time information may be used to calculate a charging time period based on at least one of the following data, to configure the time information: electricity consumption statistics data, driving distance data, charging data, and the like. For example, the charging data includes electricity charging standards in different time periods. For example, peak electricity demand hours are from 18:00 to 21:00, and a charging standard in this period is 1 yuan/kWh. A charging standard in another time period is 0.5 yuan/kWh. The time information may indicate that the time period for performing scheduled charging is set to another time period other than 18:00 to 21:00.

In a possible implementation, the charging control apparatus 200 further includes an operation module. The operation module is configured to generate an operation instruction based on an operation of a user. The operation instruction may indicate time information. For example, the operation module may be a touchscreen, and the user may perform a touch operation on the touchscreen, to complete setting the time information. In another possible implementation, the charging control apparatus 200 further includes a communication module. The communication module receives the time information, and the time information may be sent by a terminal. For example, a user may set, by using the terminal, a time period for performing scheduled charging, and send the time information to the time determining module.

In addition, with rapid development of new energy technologies, a bidirectional charging technology has been applied more widely in a field of new energy. Especially in an electric vehicle, application of the bidirectional charging technology can further expand an application scenario of the electric vehicle. An electric vehicle that supports a bidirectional charging function may not only receive and store electric energy provided by power sourcing equipment (that is, charging), but also provide electric energy for an external device (another electric vehicle) (that is, power supply). However, when the electric vehicle charges another vehicle, according to a requirement of the national standard, charging power also needs to be determined based on a control pilot signal and a charging status needs to be monitored in real time.

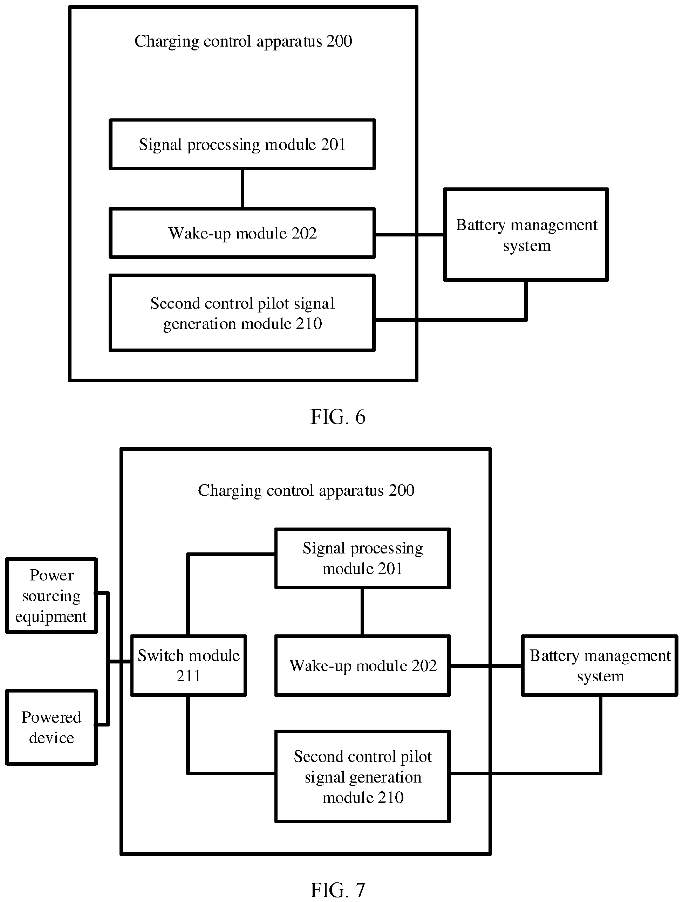

In view of this, in a possible implementation, as shown in FIG. 6, the charging control apparatus 200 further includes: a second control pilot signal generation module 210, configured to: obtain a first level signal from the battery management system, generate a second control pilot signal based on the first level signal, and send the second control pilot signal to a powered device.

The powered device may be, but is not limited to, an electric vehicle, or may be other utilization equipment designed in compliance with *the Electric Vehicle Conductive Charging System Standard.* A person skilled in the art should know that, and this is not limited herein.

Generally, there is no stable voltage source that meets a voltage standard of the control pilot signal on the electric vehicle. As a result, the second control pilot signal cannot be sent to the powered device. Therefore, the first level signal obtained from the battery management system may be adjusted, to obtain a level signal that meets the voltage standard of the control pilot signal, and shaping processing is performed on the level signal that meets the voltage standard of the control pilot signal, to finally output the second control pilot signal, to implement a control pilot function based on the second control pilot signal. The second control pilot signal may be a CP signal, and the CP signal may also be a type limited in the foregoing embodiment. Same descriptions are not described again. For example, an electric vehicle usually has only a 5 V or 3.3 V stable power supply, and a 5 V or 3.3 V stable level needs to be raised to a 12 V level that meets the voltage standard of the control pilot signal. In addition, the control pilot signal is generally a PWM signal. Therefore, shaping processing needs to be performed on the 12 V level, and finally a control pilot signal that meets an edge standard of the PWM signal is output, to reduce slew time of the control pilot signal, to accelerate a voltage inversion rate.

In a possible implementation, as shown in FIG. 7, the charging control apparatus 200 further includes:
a switch module 211, configured to: when the battery management system needs to be woken up, connect power sourcing equipment to the signal processing module 201; and when a powered device needs to be charged, connect the powered device to the second control pilot signal generation module 210. The switch module 211 may be but is not limited to a relay switch. By using the switch module 211, the charging control apparatus 200 in this embodiment of this application may implement a bidirectional charging technology, and not only receive electric energy provided by the power sourcing equipment, but also provide electric energy for the powered device in another time period.

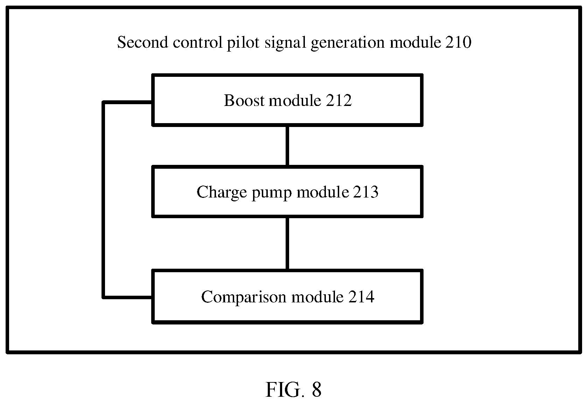

In a possible implementation, as shown in FIG. 8, the second control pilot signal generation module 210 includes: a boost module 212, configured to: obtain the first level signal from the battery management system, perform boost processing on the first level signal to obtain a second level signal, and separately send the second level signal to a charge pump module 213 and a comparison module 214; the charge pump module 213, configured to: generate a third level signal based on the second level signal, and send the third level signal to the comparison module 214, where a level of the third level signal and a level of the second level signal are opposite numbers; and the comparison module 214, configured to: receive the second level signal and the third level signal, generate the second control pilot signal based on the second level signal and the third level signal according to a target waveform rule, and send the second control pilot signal to the powered device.

The boost module 212 may be a boost chopper circuit to boost and stabilize the first level signal to the second level signal. When the second control pilot signal is a PWM signal, the charge pump module 213 may be a voltage inverter. The voltage inverter is essentially a direct current-direct current DC/DC converter, and converts an input positive level into a reverse negative level. Therefore, the third level signal may be generated based on the second level signal. The comparison module 214 may include a comparator, and output a PWM signal based on positive and negative level signals that are input at the same time. In addition, to enable a positive-going transition and falling of a waveform of the output second control pilot signal to meet a requirement of the national standard, the comparison module 214 may further include a triode active amplification circuit. Active amplification is performed by the triode active amplification circuit to reduce slew time and accelerate a rising/falling inversion rate.

Further, in a possible implementation, the charging control apparatus 200 may further include a battery level detection module. The battery level detection module is configured to: detect a current battery level, and when the battery level is less than a preset value, enable the battery management system to be dormant and stop charging a powered device. In this implementation, the preset value may be 50%. It may be understood that the foregoing is merely a specific example. Other application scenarios are not enumerated one by one.

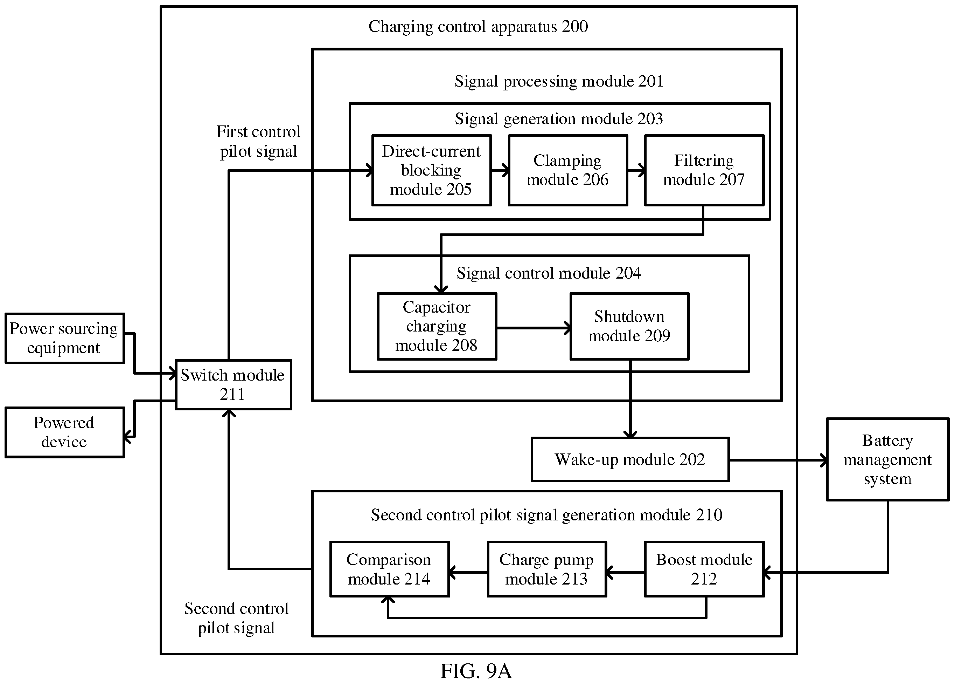

As shown in FIG. 9A, this application provides an example of a diagram of a specific structure of a charging control apparatus 200. The charging control apparatus 200 specifically includes the following modules: a signal processing module 201, a wake-up module 202, a second control pilot signal generation module 210, and a switch module 211. The signal processing module 201 includes a signal generation module 203 and a signal control module 204. The signal generation module 203 includes: a direct-current blocking module 205, a clamping module 206, and a filtering module 207. The signal control module 204 includes a capacitor charging module 208 and a shutdown module 209. The second control pilot signal generation module 210 includes a boost module 212, a charge pump module 213, and a comparison module 214. For specific implementations and corresponding beneficial effects of this embodiment of this application, refer to descriptions of the foregoing embodiments. Details are not described herein again.

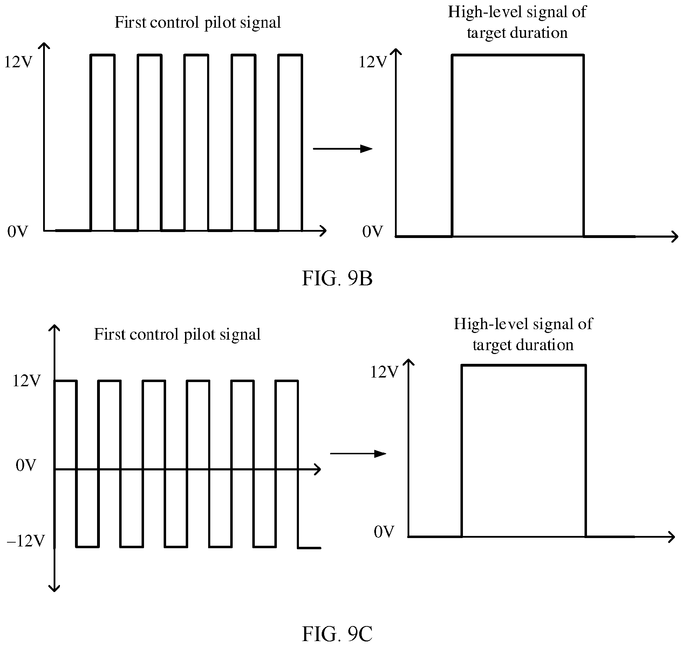

After receiving any type of CP signal, the charging control apparatus 200 can generate a high-level signal of target duration based on the CP signal, and wake up the battery management system by using the high-level signal of the target duration as a wake-up signal, to implement a one-time wake-up function. In addition, regardless of a type of CP signal received by the charging control apparatus, a finally generated wake-up signal is a signal with a fixed pulse width and a fixed voltage amplitude. For example, as shown in FIG. 9B, when a CP signal output by the power sourcing equipment is a PWM pulse of 0 V to 12 V, after the PWM pulse is processed by the charging control apparatus 200, a 12 V pulse signal of target duration is output to the battery management system. As shown in FIG. 9C, when the CP signal is a PWM pulse of -12 V to 12 V, after the PWM pulse is processed by the charging control apparatus 200, a 12 V pulse signal of target duration is also output to the battery management system.

Based on a same technical concept, an embodiment of this application further provides a charging control method, applied to the charging control apparatus 200. Specifically, the charging control apparatus may implement the charging control method provided in this embodiment of this application by using software, hardware, or a combination of software and hardware. This is not limited in this embodiment of this application.

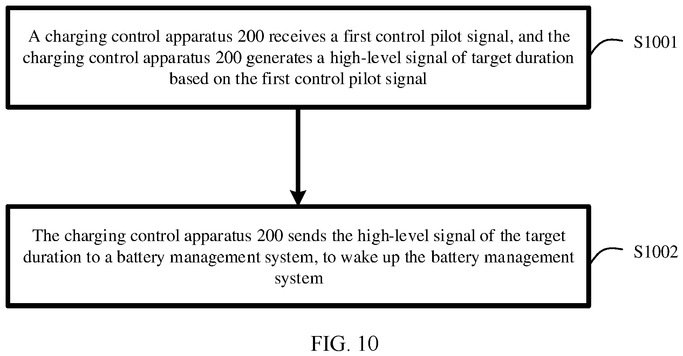

For example, the charging control method provided in this embodiment of this application may be implemented by the charging control apparatus 200 provided in any one of the foregoing embodiments. Details are not described again. For example, the charging control apparatus 200 shown in FIG. 2 is used as an example. The charging control method provided in this embodiment of this application may be shown in FIG. 10, and mainly includes the following steps.

S1001: The charging control apparatus 200 receives a first control pilot signal, and the charging control apparatus 200 generates a high-level signal of target duration based on the first control pilot signal.

S1002: The charging control apparatus 200 sends the high-level signal of the target duration to a battery management system, to wake up the battery management system.

In some possible implementations, the charging control method provided in this embodiment of this application may further receive the first control pilot signal, generate the high-level signal based on the first control pilot signal, and stop sending the high-level signal after duration in which the high-level signal is received reaches the target duration.

In some possible implementations, the charging control method provided in this embodiment of this application may further include: receiving the first control pilot signal, and removing a direct-current component from the first control pilot signal to generate a first signal, where the first signal is an alternating-current signal; keeping a top or a bottom of a waveform of the first signal at a target level, to obtain a second signal; and filtering the second signal to obtain the high-level signal.

In some possible implementations, the charging control method provided in this embodiment of this application may further include: The high-level signal may charge a charging capacitor, where duration in which the charging capacitor is charged to a target voltage is the target duration; and when a voltage of the charging capacitor reaches the target voltage, connecting a second end of a switch transistor and a third end of the switch transistor, and stopping sending the high-level signal.

In some possible implementations, the charging control method provided in this embodiment of this application may further include: obtaining a first level signal from the battery management system, generating a second control pilot signal based on the first level signal, and sending the second control pilot signal to a powered device.

In some possible implementations, the charging control method provided in this embodiment of this application may further include: obtaining the first level signal from the battery management system, performing boost processing on the first level signal to obtain a second level signal; generating a third level signal based on the second level signal, where a level of the third level signal and a level of the second level signal are opposite numbers; and receiving the second level signal and the third level signal, generating the second control pilot signal based on the second level signal and the third level signal according to a target waveform rule, and sending the second control pilot signal to the powered device.

Based on a same technical concept, an embodiment of this application further provides an electric vehicle. The electric vehicle includes the charging control apparatus defined in the foregoing embodiment.

Based on a same technical concept, an embodiment of this application further provides a charging control system. The charging control system includes power sourcing equipment and a charging control apparatus integrated in an electric vehicle. The charging control apparatus is separately connected to the power sourcing equipment and a battery management system in the electric vehicle.

A person skilled in the art should understand that embodiments of this application may be provided as methods, systems, or computer program products. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. Thus, this application is intended to cover such modifications and variations to this application, provided that the modifications and variations fall within the scope of the claims of this application and their equivalent technologies.

## Claims

1. A charging control apparatus, comprising a signal processing module and a wake-up module, wherein
the signal processing module is configured to: receive a first control pilot signal sent by power sourcing equipment, and send a high-level signal of target duration to the wake-up module based on the first control pilot signal; and
the wake-up module is configured to wake up a battery management system after duration in which the high-level signal is received reaches the target duration.

2. The apparatus according to claim 1, wherein the signal processing module comprises a signal generation module and a signal control module, wherein
the signal generation module is configured to: receive the first control pilot signal, generate the high-level signal based on the first control pilot signal, and separately send the high-level signal to the signal control module and the wake-up module; and
the signal control module is configured to: after the duration in which the high-level signal is received reaches the target duration, enable the signal generation module to stop sending the high-level signal to the wake-up module.

3. The apparatus according to claim 2, wherein the signal generation module comprises a direct-current blocking module, a clamping module, and a filtering module, wherein
the direct-current blocking module is configured to: receive the first control pilot signal, remove a direct-current component from the first control pilot signal to generate a first signal, and send the first signal to the clamping module, wherein the first signal is an alternating-current signal;
the clamping module is configured to: keep a top or a bottom of a waveform of the first signal at a target level to obtain a second signal, and send the second signal to the filtering module; and
the filtering module is configured to: filter the second signal to obtain the high-level signal, and separately send the high-level signal to the signal control module and the wake-up module.

4. The apparatus according to claim 2 or 3, wherein the signal control module comprises a capacitor charging module and a shutdown module, the capacitor charging module comprises a charging capacitor, the shutdown module comprises a switch transistor, a first end of the charging capacitor is connected to an output end of the signal generation module and a first end of the switch transistor, a second end of the charging capacitor is grounded, a second end of the switch transistor is connected between the signal generation module and the wake-up module, and a third end of the switch transistor is grounded;
the capacitor charging module is configured to: after receiving the high-level signal, charge the charging capacitor in the shutdown module based on the high-level signal, wherein duration in which the charging capacitor is charged to a target voltage is the target duration; and
the shutdown module is configured to: when a voltage of the charging capacitor reaches the target voltage, connect the second end of the switch transistor and the third end of the switch transistor, so that the signal generation module stops sending the high-level signal to the wake-up module.

5. The apparatus according to claim 4, wherein the switch transistor is an N-type metal oxide semiconductor NMOS.

6. The apparatus according to any one of claims 1 to 5, wherein the charging control apparatus further comprises:
a second control pilot signal generation module, configured to: obtain a first level signal from the battery management system, generate a second control pilot signal based on the first level signal, and send the second control pilot signal to a powered device.

7. The apparatus according to claim 6, wherein the charging control apparatus further comprises:
a switch module, configured to: when the battery management system needs to be woken up, connect the power sourcing equipment to the signal processing module; and when the powered device needs to be charged, connect the powered device to the second control pilot signal generation module.

8. The apparatus according to claim 6, wherein the second control pilot signal generation module comprises a boost module, a charge pump module, and a comparison module, wherein
the boost module is configured to: obtain the first level signal from the battery management system, perform boost processing on the first level signal to obtain a second level signal, and separately send the second level signal to the charge pump module and the comparison module;
the charge pump module is configured to: generate a third level signal based on the second level signal, and send the third level signal to the comparison module, wherein a level of the third level signal and a level of the second level signal are opposite numbers; and
the comparison module is configured to: receive the second level signal and the third level signal, generate the second control pilot signal based on the second level signal and the third level signal according to a target waveform rule, and send the second control pilot signal to the powered device.

9. A charging control method, applied to a charging control apparatus, wherein the method comprises:
receiving a first control pilot signal, and generating a high-level signal of target duration based on the first control pilot signal; and
sending the high-level signal of the target duration to a battery management system, to wake up the battery management system.

10. The method according to claim 9, wherein the receiving a first control pilot signal, and generating a high-level signal of target duration based on the first control pilot signal comprises:
receiving the first control pilot signal, and generating the high-level signal based on the first control pilot signal; and
stopping sending the high-level signal after duration in which the high-level signal is received reaches the target duration.

11. The method according to claim 10, wherein the receiving the first control pilot signal, and generating the high-level signal based on the first control pilot signal comprises:
receiving the first control pilot signal, and removing a direct-current component from the first control pilot signal to generate a first signal, wherein the first signal is an alternating-current signal;
keeping a top or a bottom of a waveform of the first signal at a target level, to obtain a second signal; and
filtering the second signal to obtain the high-level signal.

12. The method according to claim 10 or 11, wherein the stopping sending the high-level signal after duration in which the high-level signal is received reaches the target duration comprises:
charging, by the high-level signal, a charging capacitor, wherein duration in which the charging capacitor is charged to a target voltage is the target duration; and
when a voltage of the charging capacitor reaches the target voltage, connecting a second end of a switch transistor and a third end of the switch transistor, and stopping sending the high-level signal.

13. The method according to any one of claims 9 to 12, wherein the method further comprises:
obtaining a first level signal from the battery management system, generating a second control pilot signal based on the first level signal, and sending the second control pilot signal to a powered device.

14. The method according to claim 13, wherein the obtaining a first level signal from the battery management system, generating a second control pilot signal based on the first level signal, and sending the second control pilot signal to a powered device comprises:
obtaining the first level signal from the battery management system, and performing boost processing on the first level signal to obtain a second level signal;
generating a third level signal based on the second level signal, wherein a level of the third level signal and a level of the second level signal are opposite numbers; and
receiving the second level signal and the third level signal, generating the second control pilot signal based on the second level signal and the third level signal according to a target waveform rule, and sending the second control pilot signal to the powered device.

15. An electric vehicle, comprising the charging control apparatus according to any one of claims 1 to 8.

16. A charging control system, comprising power sourcing equipment, an electric vehicle, and the charging control apparatus according to any one of claims 1 to 8, wherein the charging control apparatus is separately connected to the power sourcing equipment and the electric vehicle.
